# EUROPÄISCHE PATENTANMELDUNG

(11) **EP 4 573 974 A1**
(43) Veröffentlichungstag der Anmeldung: **25.06.2025**
(21) Anmeldenummer: 24212710.8
(22) Anmeldetag: 13.11.2024
(51) Int. Cl.: A47C 31/00, B60N 2/24, B61D 33/00, B64D 11/06

(54) **RÜCKENLEHNENELEMENT FÜR EINE SITZANORDNUNG EINES PERSONENTRANSPORTMITTELS**

(30) Priorität: 22.12.2023 DE 102023136544
(71) Anmelder: GRAMMER AG, 92289 Ursensollen (DE)
(72) Erfinder: Übelacker, Roland, 92536 Pfreimd (DE)
(74) Vertreter: Hannke, Christian

(57) **Zusammenfassung**

Die Erfindung betrifft Rückenlehnenelement für eine Sitzanordnung eines Personentransportmittels umfassend ein Trägerelement, auf welchem zumindest ein Polsterelement angeordnet ist, wobei das Rückenlehnenelement eine Hitze-/ Feuerabschirmeinrichtung umfasst, welche lediglich an dem Rückenlehnenelement befestigt ist, wobei die Hitze-/ Feuerabschirmeinrichtung zumindest ein flächiges Element umfasst und in einem entlang einer Höhenachse unteren Bereich des Rückenlehnenelements in das zumindest eine Polsterelement integriert ist.

## Beschreibung

Die Erfindung betrifft ein Rückenlehnenelement für eine Sitzanordnung eines Personentransportmittels umfassend ein Trägerelement, auf welchem zumindest ein Polsterelement angeordnet ist.

Derartige Personentransportmittel sind beispielsweise Schienenfahrzeuge wie Züge, U-Bahnen, Trambahnen etc. oder Busse. Dabei ist der Brandschutz in Personentransportmitteln besonders wichtig. Ein Hitze- und/oder Brandherd auf dem Sitzteil eines Fahrgastsitzes können größere Brände verursachen und somit zu schwerwiegenden Schäden in dem Personentransportmittel und/oder zu Gefährdungen von Fahrgästen führen. In diesem Zusammenhang wurden die Anforderungen für Fahrgastsitze in der Europäischen Brandnorm EN 45545 Ausgabe August 2020 weiter verschärft.

Aufgabe der vorliegenden Erfindung ist eine Sitzanordnung bereitzustellen, welche einen verbesserten Brandschutz bereitstellt.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist ein Rückenlehnenelement für eine Sitzanordnung eines Personentransportmittels umfassend ein Trägerelement, auf welchem zumindest ein Polsterelement angeordnet ist, wobei das Rückenlehnenelement eine Hitze-/ Feuerabschirmeinrichtung umfasst, welche lediglich an dem Rückenlehnenelement befestigt ist, wobei die Hitze-/ Feuerabschirmeinrichtung zumindest ein flächiges Element umfasst und in einem entlang einer Höhenachse (Z) unteren Bereich des Rückenlehnenelements in das zumindest eine Polsterelement integriert ist.

Das zumindest eine flächige Element dient als eine effektive Hitze-/ Feuerabschirmung, welche eine Ausbreitung des Brandes auf effektive und einfache Art und Weise eindämmt beziehungsweise verhindert. Dadurch, dass die Hitze-/ Feuerabschirmeinrichtung lediglich an dem Rückenlehnenelement befestigt ist, wird eine besonders einfache Konstruktion einer Sitzanordnung bereitgestellt. Insbesondere ist die Hitze-/ Feuerabschirmeinrichtung nicht an einem Rahmengestell der Sitzanordnung gelagert oder befestigt, vielmehr ist diese ausschließlich an dem Rückenlehnenelement befestigt beziehungsweise gelagert. Es kann somit ein Rückenlehnenelement hergestellt werden, welches bereits eine Hitze-/ Feuerabschirmeinrichtung umfasst. Dese kann dann an einem Sitzteil und/oder an einem Rahmenelement der Sitzanordnung montiert werden. Es wird somit eine besonders einfache Montage der Sitzanordnung ermöglicht.

Unter einem flächigen Element ist ein Element mit einer Ausdehnung entlang einer Breitenrichtung und einer Höhenrichtung zu verstehen, welche wesentlich größer als eine Ausdehnung des Elements in einer Tiefenrichtung (Dicke) ist. Das flächige Element kann vorzugsweise eine beliebige Form, beispielsweise eine rechteckige Form, haben. Ferner kann das flächige Element zumindest eine Wölbung entlang einer Achse, welche nicht in einer Ebene der Breitenrichtung und Höhenrichtung liegt, aufweisen.

Vorzugsweise erstreckt sich das Rückenlehnenelement entlang einer Höhenachse (Z), einer Tiefenachse (X) und einer Breitenachse (Y).

Das Trägerelement des Rückenlehnenelements ist vorzugsweise dazu geeignet und dafür vorgesehen, das zumindest eine Polsterelement zu tragen. Ferner können weitere Komponenten beispielsweise eine Kopfstütze oder Verkleidungselement(e) an dem Trägerelement angeordnet sein. Ferner ist das Trägerelement mit einem Sitzteil der Sitzanordnung oder einem Rahmenelement der Sitzanordnung verbindbar. Das Trägerelement kann vorzugsweise als ein Schalenelement, als ein Rahmengestell oder ähnliches ausgebildet sein.

Das Polsterelement besteht vorzugsweise aus zumindest einer Polsterschicht. Denkbar wäre, dass lediglich eine oder mehrere Polsterschichten vorgesehen sind. Vorteilhafterweise ist auf der Polsterschicht noch ein Bezug vorgesehen. Das zumindest eine flächige Element kann vorteilhafterweise innerhalb der zumindest einen Polsterschicht oder entlang einer Tiefenachse (X) hinter zumindest einer Polsterschicht angeordnet sein. Denkbar wäre jedoch auch, dass entlang der Tiefenachse (X) zwischen dem Insassen und dem zumindest einen flächigen Element zumindest eine Polsterschicht vorgesehen ist. Denkbar wären auch noch weitere Zwischenschichten zwischen Bezug und Polsterschicht und/oder zwischen der Polsterschicht und der zumindest einen Hitze-/ Feuerabschirmeinrichtung. Die zumindest eine Hitze-/ Feuerabschirmeinrichtung stellt somit keine Einbuße im Hinblick auf den Komfort des Insassen dar. Durch die zumindest eine Polsterschicht ist das zumindest eine flächige Element durch den Insassen kaum spürbar. Vorzugsweise ist das flächige Element mit dem das Polsterelement bildenden Material zumindest teilweise umschäumt.

Nach einer bevorzugten Ausführungsform ist die Hitze-/ Feuerabschirmeinrichtung mittels einer Lagerungseinrichtung an dem Trägerelement angeordnet. Bevorzugt ist das flächige Element als ein plattenartiges Element, beispielweise ein Blech ausgebildet. Vorzugsweise ist das flächige Element entlang der Breitenachse (Y) mittig an dem Rückenlehnenelement angeordnet.

Es ist von Vorteil, dass das zumindest eine flächige Element zumindest teilweise aus einem feuerfesten Material und/oder einem wärmeleitenden Material und/oder einem Metall besteht.

Nach einer weiteren bevorzugten Ausführungsform ist die Hitze-/ Feuerabschirmeinrichtung derart ausgestaltet und dafür vorgesehen, dass bei Auftreten eines Hitze- und/oder Brandherdes eine zumindest abschnittsweise Verlagerung des zumindest einen flächigen Elements zu dem Hitze- und/oder Brandherd hin erfolgt.

Durch die Verlagerung des zumindest einen flächigen Elements zu dem Hitze- und/oder Brandherd hin, wird dieser von oben durch das zumindest eine flächige Element zumindest teilweise abgedeckt. Das zumindest eine flächige Element dient demnach als eine effektive Hitze-/ Feuerabschirmung, welche eine Ausbreitung des Brandes auf effektive und einfache Art und Weise eindämmt beziehungsweise verhindert.

Oftmals entsteht der Hitze- und/oder Brandherd auf dem Sitzteil der Sitzanordnung, beispielsweise ausgelöst durch Unachtsamkeiten oder Vandalismus. Demnach ist es von Vorteil, dass die zumindest eine Hitze-/ Feuerabschirmeinrichtung entlang der Höhenachse (Z) oberhalb des Sitzteils angeordnet ist. Demnach ist vorteilhafterweise die zumindest eine Hitze-/ Feuerabschirmeinrichtung derart ausgestaltet und dafür vorgesehen, dass bei Auftreten eines Hitze- und/oder Brandherdes am Sitzteil eine zumindest abschnittsweise Verlagerung des zumindest einen flächigen Elements zu dem Sitzteil hin erfolgt. Ein Hitze- oder Brandherd wird somit durch die zumindest eine Hitze-/ Feuerabschirmeinrichtung abgeschirmt. Es wird somit verhindert, dass die Rückenlehne der Sitzanordnung Feuer fängt. Weiterhin wird verhindert, dass ein Brand auf die Einrichtung des Personentransportmittels über der Sitzanordnung übergreift.

Nach einer vorteilhaften Ausführungsform ist es vorgesehen, dass bei Auftreten eines Hitze- und/oder Brandherds die zumindest eine Polsterschicht beziehungsweise weitere Schichten, welche vor dem zumindest einem plattenartigen Element vorgesehen sind, zunächst durch die Hitze- und/oder Brandeinwirkung in deren Stabilität geschwächt oder beschädigt wird. Durch diese Schwächung oder Beschädigung verhindern diese Schichten nicht mehr, die Verlagerung des zumindest einen flächigen Elements zu dem Hitze- und/oder Brandherd hin. Denkbar wäre auch, dass die Polsterschicht und die gegebenenfalls vorgesehenen weiteren Schichten vor dem zumindest einem flächigen Element Sollbruchstellen aufweisen, welche eine Verlagerung bei einer Hitze oder Brandeinwirkung ermöglichen. Denkbar wäre auch, dass die Polsterschicht und die gegebenenfalls vorgesehenen weiteren Schichten vor dem zumindest einem flächigen Element eine Ausnehmung im Bereich des zumindest einem flächigen Elements aufweisen, wobei auf dem zumindest einem flächigen Element eine getrennte Polsterschicht beziehungsweise gegebenenfalls vorgesehenen weiteren Schichten angeordnet sind.

Nach einer weiteren bevorzugten Ausführungsform umfasst die Lagerungseinrichtung einen Vorspannmechanismus, welcher eine Vorspannung für das zumindest eine flächige Element gegen einen Abschnitt des Polsterelements bereitstellt. Das zumindest eine flächige Element wird somit vorteilhafterweise mit der Vorspannung gegen einen Abschnitt des Polsterelements gedrückt. Eine Hitze- und/oder Brandeinwirkung verursacht zumindest eine Schwächung der Stabilität des Abschnitts des Polsterelements, so dass eine Verlagerung des zumindest einen flächigen Elements aufgrund der Vorspannung erfolgt. Der Abschnitt des Polsterelements hält somit das zumindest eine flächige Element in seiner Grundstellung. In dieser Grundstellung stellt der Vorspannmechanismus eine Vorspannung bereit. Tritt nun ein Hitze- und/oder Brandherd vorzugsweise auf dem Sitzteil, auf, wird durch dessen Wirkung der Abschnitt des Polsterelements und gegebenenfalls der Bezug und weitere Schichten, beschädigt, so dass die Stabilität des Polsterelements geschwächt wird. Ab einem gewissen Grad der Schwächung ist die Vorspannung ausreichend, um das zumindest eine flächige Element anzutreiben und somit eine Verlagerung des zumindest einen flächigen Elements zu dem Hitze und/oder Brandherd hin zu verursachen.

Vorzugsweise umfasst der Vorspannmechanismus eine Torsionsfeder, auch Drehfeder genannt. Vorzugsweise sind zwei Torsionsfedern vorgesehen. Selbstverständlich sind auch noch anderweitige Elemente denkbar, welche eine Vorspannung erzeugen können, beispielsweise Druckfedern oder elastische Elemente.

Nach einer weiteren Ausführungsform kann das zumindest eine plattenartige Element zumindest einen Rahmen umfassen, an welchem eine Bespannung angeordnet ist. Die Bespannung besteht bevorzugt aus einem feuerfesten Material und/oder einem "Fireblocker". Als Fireblocker werden flammhemmende stoffartige Materialen, beispielsweise Vliese bezeichnet. Der zumindest eine Rahmen kann dabei vorteilhafterweise ein Rohrrahmen oder ein Rahmen aus Streben sein. Der zumindest eine Rahmen kann vorzugsweise aus einem Metall beispielsweise Stahl hergestellt sein. Der zumindest eine Rahmen mit der feuerfesten Bespannung kann vorzugsweise gemäß der zuvor genannten Ausführungsform mit dem Vorspannmechanismus angetrieben werden.

Nach einer weiteren bevorzugten Ausführungsform weist das zumindest eine flächige Element zumindest ein Federblech auf, welches eine Vorspannung für das zumindest eine flächige Element gegen einen Abschnitt des Polsterelements bereitstellt. Vorzugsweise verursacht eine Hitze- und/oder Brandeinwirkung zumindest eine Schwächung der Stabilität des Abschnitts des Polsterelements verursacht, so dass eine Verlagerung eines Abschnitts des zumindest einen flächigen Elements aufgrund der Vorspannung erfolgt. In einem Grundzustand, d.h. einem gewöhnlichen Gebrauchszustand des Rückenlehnenelements, beziehungsweise der Sitzanordnung, in welchem keine Hitze- und/oder Brandeinwirkung vorherrscht, weist das zumindest eine Federblech somit eine Biegung auf, durch welche die Vorspannung erzeugt wird. Das flächige Element kann vorzugsweise vollständig als Federblech ausgebildet sein. Denkbar wäre jedoch auch, dass bestimmte Bereiche als Federblech ausgebildet sind. Bevorzugt weist das Federblech Schlitze auf, welche beispielsweise zur Befestigung dienen können. Die Lagerungseinrichtung umfasst nach dieser vorteilhaften Ausführungsform bevorzugt keine weitere Vorspanneinrichtung. Vorzugsweise stellt die Lagerungseinrichtung eine feste Verbindung zwischen dem Trägerelement und dem flächigen Element bereit. Eine solche Verbindung kann eine stoffschlüssige Verbindung und/oder eine formschlüssige Verbindung und/oder eine Kraftschlüssige Verbindung sein. Beispielhafte Verbindungen sind Schweißverbindungen, Schraubverbindungen, Nietverbindungen, Steck- oder Schnappverbindungen etc.

Nach einer weiteren vorteilhaften Ausführungsform sind mehrere Hitze-/ Feuerabschirmeinrichtungen vorgesehen. Vorteilhafterweise können diese Hitze-/ Feuerabschirmeinrichtungen plattenartige Elemente umfassen, welche verschiedene Größen aufweisen. So könnten beispielsweise entlang der Tiefenachse (X) und/oder entlang der Höhenachse (Z) und/oder entlang der Breitenachse (Y) mehrere Hitze-/ Feuerabschirmeinrichtungen mit zunehmender Größe beziehungsweise mit zunehmenden Abmessungen hintereinander angeordnet sein. Die Hitze-/ Feuerabschirmeinrichtungen können durch einen vorgestimmten Ablauf ausgelöst werden, d.h. die Verlagerung der einzelnen Hitze-/ Feuerabschirmeinrichtungen ist derart vorbestimmt, dass eine Feuerausbreitung gezielt eingedämmt beziehungsweise gesteuert werden kann.

Nach einer weiteren bevorzugten Ausführungsform ist das zumindest eine flächige Element derart an dem Trägerelement angeordnet, dass bei einer Hitze- und/oder Brandeinwirkung ein Großteil einer Schmelze von Bereichen des Polsterelements, welche entlang der Höhenachse (Z) oberhalb des zumindest einen flächigen Elements angeordnet sind, überwiegend hinter dem zumindest einem flächigen Element nach unten abgeleitet wird und somit von dem Hitze- und/oder Brandherd weggeleitet wird. Vorzugsweise nimmt das zumindest eine flächigen Element Wärme von dem Hitze- und/oder Brandherd auf und gibt diese vorzugsweise an die Bereiche des Polsterelements, welche über dem zumindest einen flächigen Element liegen ab.

Der Hitze- und/oder Brandherd befindet sich in der Regel auf dem Sitzteil der Sitzanordnung. Durch die Hitze- und/oder Brandeinwirkung wird zunächst der Abschnitt des Postelements vor dem zumindest einem flächigen Element abgeschmolzen. Wie bereits beschrieben kann nach einer Ausführungsform ein solches Abschmelzen eine Bewegung des zumindest einen flächigen Elements verursachen. Denkbar wäre jedoch auch eine vorteilhafte Ausgestaltung, bei welcher das zumindest eine flächige Element unbeweglich ist. Das zumindest eine flächige Element wäre somit feststehend und starr an dem Trägerelement angeordnet. Nach dem Abschmelzen oder Verbrennen des Abschnitts des Polsterelementes vor dem zumindest einem flächigen Element wird die Wärme des Hitze- und/oder Brandherds von dem zumindest einem flächigen Element reflektiert und/oder von diesem aufgenommen. Diese Wärmeaufnahme sorgt für ein Schmelzen der Bereiche des Polsterelement oberhalb des zumindest einen flächigen Elements durch einen entsprechenden Wärmeübertrag. Allerdings wird die Schmelze durch das zumindest eine flächige Element nun entlang der Tiefenachse (X) nach hinten abgeleitet. Die Schmelze gelangt somit nicht zu dem Hitze- und/oder Brandherd, wodurch dieser sich nicht vergrößern kann. Dieser vorteilhafte Effekt kann durch ein verlagerbar gelagertes flächiges Element aber auch durch ein feststehendes flächiges Element ermöglicht werden.

Nach einer weiteren vorteilhaften Ausführungsform ist in einem Grundzustand das zumindest eine flächige Element in einer Ebene angeordnet, welche mit der Höhenachse (Z) einen Winkel a einschließt. Vorzugsweise liegt der Winkel α in einem Bereich zwischen 5° und 45° bevorzugt in einem Bereich zwischen 10° und 25°. Vorteilhafterweise ist der genannte Grundzustand der gewöhnliche Gebrauchszustand des Rückenlehnenelements beziehungsweise der Sitzanordnung, in welchem keine Hitze- und/oder Brandeinwirkung vorherrscht.

Durch die genannte vorteilhafte Anordnung des flächigen Elements mit dem Winkel α erstreckt sich das flächige Element schräg noch oben. Durch eine solche Ausgestaltung kann das beschriebene Ableiten eines Großteils der Schmelze der oberen Bereiche des Polsterelements nach hinten ermöglicht werden.

Ist das zumindest eine flächige Element als ein formstabiles Element, beispielsweise eine Blech ausgebildet, kann die genannte vorteilhafte Anordnung des flächigen Elements mit dem Winkel α neben der Hitze-/ Feuerabschirmung auch eine Lordose-/ Kyphoseunterstützung im Lendenwirbelbereich des Insassen bereitstellen. Das flächige Element erstreckt sich vorzugsweise schräg nach oben und zum Insassen hin.

Durch die genannte vorteilhafte Anordnung des flächigen Elements mit dem Winkel α, weist das Polsterelement vorzugsweise entlang der Tiefenachse (X) hinter dem flächigen Element eine keilförmige Aussparung auf. In diese keilförmige Aussparung kann vorteilhafterweise ein keilförmiges Einsatzelement eingesetzt sein, welches die Aussparung ausfüllt.

Nach einer weiteren vorteilhaften Ausführungsform ist das zumindest eine flächige Element als ein Folienelement ausgebildet, welches auf einem Abschnitt des zumindest einen Polsterelements angeordnet ist. vorzugsweise ist das Folienelement auf das zumindest eine Polsterelement aufgeklebt. Vorzugsweise besteht das Folienelement aus einem Metall oder einer Metalllegierung. Beispielsweise könnte das Folienelement eine Aluminiumfolie sein. Vorzugsweise ist die Dicke des Folienelements derart ausgelegt, dass diese eine ausreichende mechanische Festigkeit und auch eine ausreichende thermische Festigkeit aufweist. Vorzugsweise ist die Dicke des Folienelement in einem Bereich zwischen 0,01 mm und 0,5 mm weiter bevorzugt in einem Bereich zwischen 0,1 mm und 0,4 mm. Durch dieses Folienelement kann das beschriebene Ableiten eines Großteils der Schmelze der oberen Bereiche des Polsterelements nach hinten ermöglicht werden. Darüber hinaus kann ein solches Folienelement einfach in dem Rückenlehnenelement integriert werden und verursacht keine Beeinflussung auf den Sitzkomfort des Insassen.

Die Aufgabe wird weiterhin von einer Sitzanordnung nach einem der vorhergehend beschriebenen Ausführungsformen gelöst. Die Sitzanordnung kann dabei mit allen bereits obig im Rahmen des Rückenlehnenelements beschriebenen Merkmalen einzeln oder in Kombination miteinander ausgestattet sein und umgekehrt.

Vorzugsweise umfasst die Sitzordnung das Rückenlehnenelement, ein Sitzteil sowie ein Rahmenelement, an welchem das das Rückenlehnenelement und das Sitzteil angeordnet sind.

Die Aufgabe wird weiterhin von einem Personentransportmittel mit einer Sitzanordnung nach einem der vorhergehend beschriebenen Ausführungsformen gelöst. Das Personentransportmittel kann dabei mit allen bereits obig im Rahmen des Rückenlehnenelements oder der Sitzanordnung beschriebenen Merkmalen einzeln oder in Kombination miteinander ausgestattet sein und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen. In den Figuren zeigen:
- Fig. 1: eine Explosionsdarstellung des Rückenlehnenelements mit einer Hitze-/ Feuerabschirmeinrichtung nach einer Ausführungsform;
- Fig. 2: eine Darstellung des Rückenlehnenelements mit einer Hitze-/ Feuerabschirmeinrichtung nach einer Ausführungsform;
- Fig. 3: eine Draufsicht des Rückenlehnenelements nach einer Ausführungsform;
- Fig. 4: eine Schnittansicht des Rückenlehnenelements mit einer Hitze-/ Feuerabschirmeinrichtung nach einer Ausführungsform;
- Fig. 5: eine Ansicht des keilförmigen Einsatzelements nach einer Ausführungsform;
- Fig. 6: eine Ansicht des flächigen Elements nach einer Ausführungsform;
- Fig. 7: eine Ansicht des flächigen Elements nach einer Ausführungsform
- Fig. 8: eine Ansicht einer Hitze-/ Feuerabschirmeinrichtung nach einer Ausführungsform;
- Fig.9: eine Seitenansicht des Rückenlehnenelements nach einer weiteren Ausführungsform;
- Fig. 10: eine seitliche Ansicht einer Sitzanordnung mit einem Rückenlehnenelement.

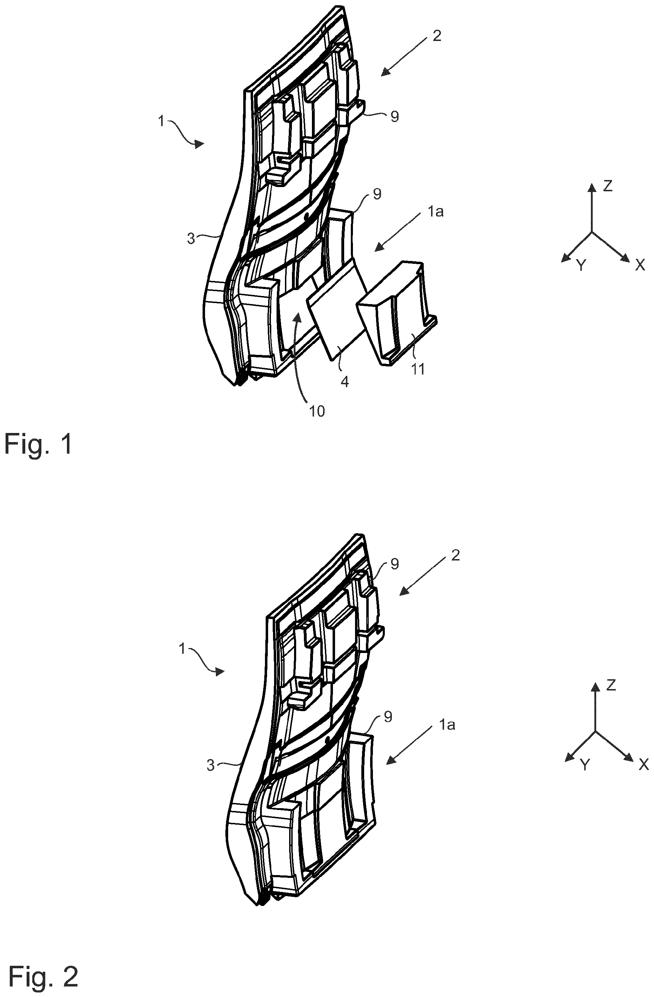

In den Figuren 1 bis 4 und 9 ist ein Rückenlehnenelement 1 für eine Sitzanordnung 100 eines Personentransportmittels dargestellt, umfassend ein Trägerelement 2, auf welchem zumindest ein Polsterelement 3 angeordnet ist, wobei das Rückenlehnenelement 1 eine Hitze-/ Feuerabschirmeinrichtung 4 umfasst, welche lediglich an dem Rückenlehnenelement 1 befestigt ist, wobei die Hitze-/ Feuerabschirmeinrichtung 4 zumindest ein flächiges Element 5 umfasst und in einem entlang einer Höhenachse Z unteren Bereich 1a des Rückenlehnenelements 1 in das zumindest eine Polsterelement 3 integriert ist.

Die Sitzanordnung 1 erstreckt sich entlang einer Höhenachse Z, einer Tiefenachse X und einer Breitenachse Y.

Das Trägerelement 2 des Rückenlehnenelements 1 ist dazu geeignet und dafür vor-gesehen, das zumindest eine Polsterelement 3 zu tragen. Ferner können weitere Komponenten beispielsweise eine Kopfstütze oder Verkleidungselement(e) an dem Trägerelement 2 angeordnet sein. Hierzu sind entsprechende Aufnahmen 9 vorgesehen wie in den Figuren 1, 2, 4 und 9ersichtlich. Das Trägerelement 2 kann vorzugsweise als ein Schalenelement, als ein Rahmengestell oder ähnliches ausgebildet sein.

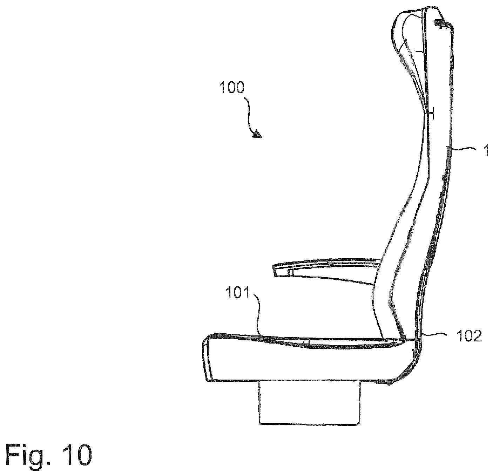

In Figur 10 ist eine Seitenansicht einer Sitzanordnung 100 dargestellt, welche direkt an dem Personentransportmittel montiert sein kann oder aber auch an einem Fußteil oder einem Unterbau. Die Sitzanordnung 100 umfasst ein Sitzteil 101 und ein Rahmenelement 102, an welchem das Sitzteil 101 und das Rückenlehnenelement 1 angeordnet sind. Nach der Ausführungsform ist keine separate Kopfstütze vorgesehen, da diese bereits durch das Rückenlehnenelements 1 ausgebildet wird. Selbstverständlich kann jedoch auch separate Kopfstütze vorgesehen sein.

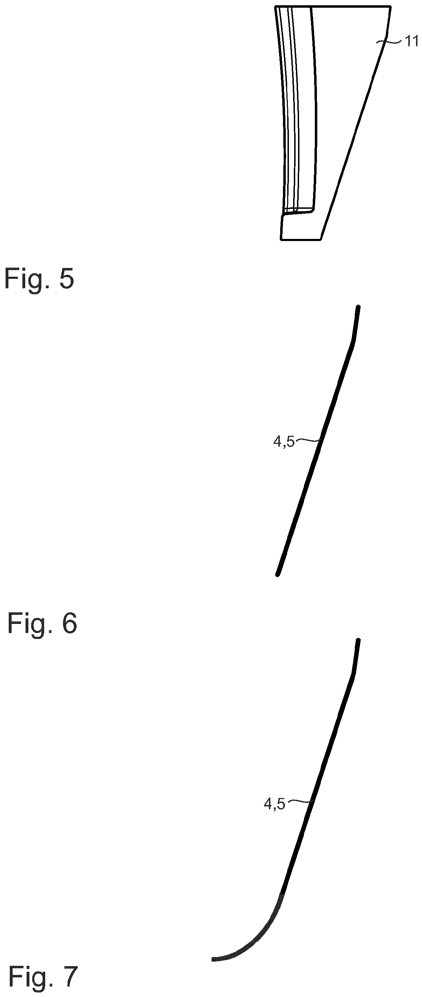

Das zumindest eine flächige Element 5 besteht zumindest teilweise aus einem feuerfesten Material und/oder einem wärmeleitenden Material und/oder einem Metall. Das zumindest eine flächige Element 5 kann beispielsweise als ein plattenartiges Element ausgestaltet sein. In Figur 6 ist ein Schnitt eines solchen flächigen Elements 5 dargestellt. Unter einem flächigen Element 5 ist ein Element mit einer Ausdehnung entlang einer Breiten- und einer Höhenrichtung zu verstehen, welche wesentlich größer als eine Ausdehnung des Elements in einer Tiefenrichtung (Dicke) ist. In den Figuren ist ein im Wesentlichen rechteckiges Element dargestellt. Dies soll jedoch keine Einschränkung der Allgemeinheit darstellen.

Die Hitze-/ Feuerabschirmeinrichtung 4 kann derart ausgestaltet und dafür vorgesehen sein, dass bei Auftreten eines Hitze- und/oder Brandherdes eine zumindest abschnittsweise Verlagerung des zumindest einen flächigen Elements 5 zu dem Hitze- und/oder Brandherd hin erfolgt. Durch die Verlagerung des zumindest einen flächigen Elements 5 zu dem Hitze- und/oder Brandherd hin wird dieser von oben durch das zumindest eine flächige Element 5 zumindest teilweise abgedeckt. Das zumindest eine flächige Element 5 dient demnach als eine effektive Hitze-/ Feuerabschirmung, welche eine Ausbreitung des Brandes auf effektive und einfache Art und Weise eindämmt, beziehungsweise verhindert.

Jedoch kann das zumindest eine flächige Element 5 auch feststehend angeordnet sein.

Das zumindest eine flächige Element 5 ist derart an dem Trägerelement 2 angeordnet, dass bei einer Hitze- und/oder Brandeinwirkung ein Großteil einer Schmelze von Bereichen 3b des Polsterelements 3, welche entlang der Höhenachse Z oberhalb des zumindest einen flächigen Elements 5 angeordnet sind, hinter dem zumindest einem flächigen Element 5 nach unten abgeleitet wird und somit von dem Hitze- und/oder Brand-herd weggeleitet wird. Dieser Vorteil ist sowohl bei einem auch feststehend angeordneten zumindest einen flächigen Element 5 als auch bei einem verlagerbar angeordneten zumindest einen flächigen Element 5 vorhanden.

Ist das zumindest eine flächige Element 5 feststehend angeordnet, kann dieses ein formstabiles Element sein oder auch ein Folienelement. Das Folienelement kann auf einem Abschnitt des zumindest einen Polsterelements 3 angeordnet sein. Dies kann beispielsweise durch eine Klebeverbindung erfolgen.

Die Hitze-/ Feuerabschirmeinrichtung 4 kann mittels einer Lagerungseinrichtung 6 an dem Trägerelement 2 angeordnet sein. Dies Lagerungseinrichtung 6 kann bei einem feststehend angeordneten zumindest einem flächigen Element 5 eine stoffschlüssige Verbindung und/oder eine formschlüssige Verbindung und/oder eine kraftschlüssige Verbindung sein.

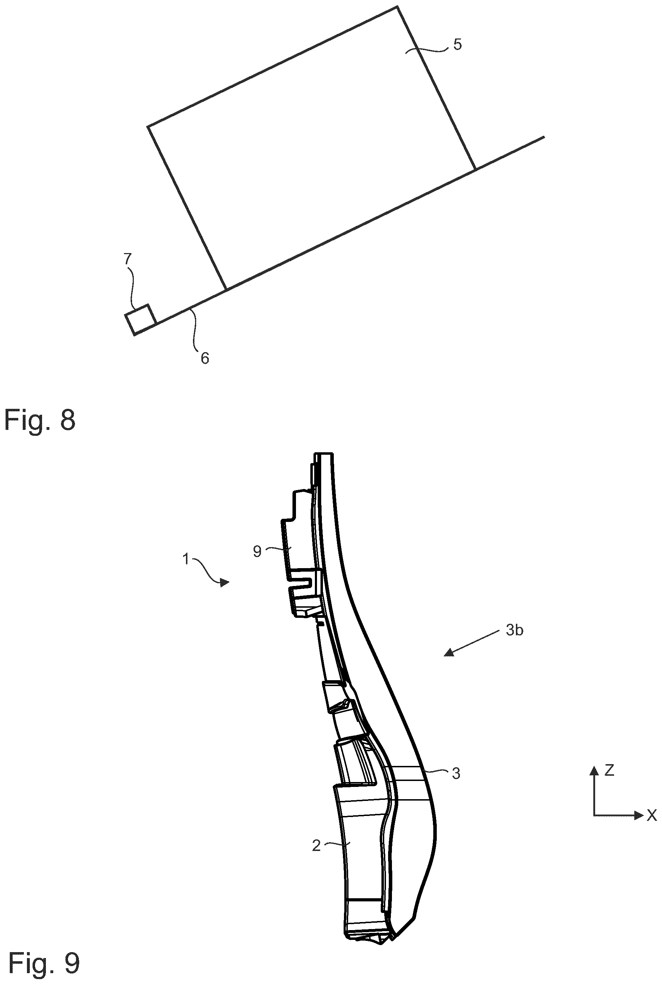

Nach einer Ausführungsform kann die Lagerungseinrichtung 6 einen Vorspannmechanismus 7 umfassen, welcher eine Vorspannung für das zumindest eine flächige Element 5 gegen einen Abschnitt 3a des Polsterelements 3 bereitstellt. Ferner kann die Lagerungseinrichtung 6 eine Welle umfassen, an welcher das flächige Element 5 angeordnet ist. Der Vorspannmechanismus 7 kann beispielsweise zumindest ein Torsionsfederelement umfassen, welches auf die Welle und somit das flächige Element wirkt. Die Wille ist weiterhin an dem Trägerelement 2 angeordnet. Eine Hitze- und/oder Brandeinwirkung verursacht zumindest eine Schwächung der Stabilität dieses Abschnitts 3a des Polsterelements 3, so dass eine Verlagerung des zumindest einen flächigen Elements 5 aufgrund der Vorspannung erfolgt.. Ein solche Ausgestaltung ist beispielsweise in Figur 8 dargestellt.

Nach einer Ausführungsform kann das zumindest eine flächige Element 5 zumindest ein Federblech aufweisen oder gänzlich aus einem Federblech bestehen. Ein Federblech ist ein elastisch deformierbares Blech. Befindet sich das Federblech in seiner deformierten Form, so drangt dieses dazu in die Ursprungsform zurückzukehren. Durch die Ausgestaltung mit dem zumindest einem Federblech wird eine Vorspannung für das zumindest eine flächige Element 5 gegen einen Abschnitt 3a des Polsterelements 3 bereitstellt. Eine Hitze- und/oder Brandeinwirkung verursacht zumindest eine Schwächung der Stabilität dieses Abschnitts 3a des Polsterelements, so dass eine Verlagerung eines Abschnitts des zumindest einen flächigen Elements 5 aufgrund der Vorspannung erfolgt.

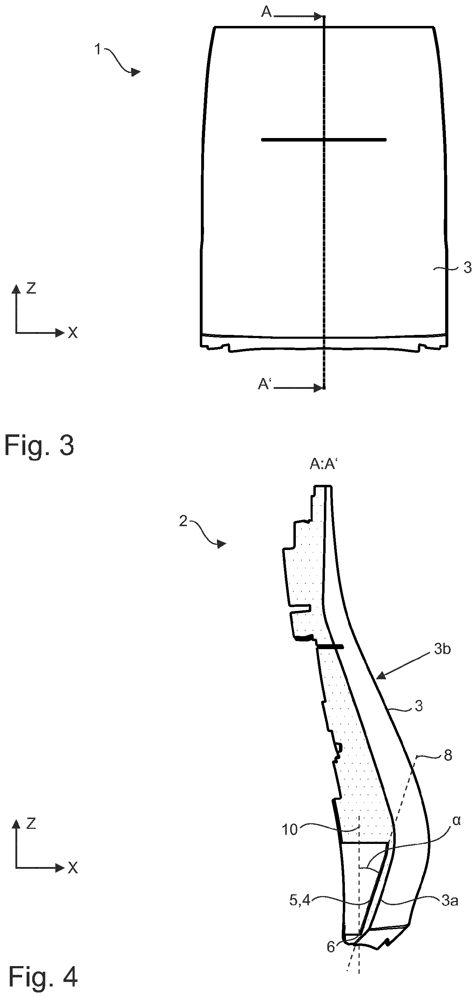

In den Figuren 1 und 4 ist zu erkennen, dass die Hitze-/ Feuerabschirmeinrichtung 5 in dem Rückenlehnenelement 3 integriert ist und in einem unteren Bereich 1a des Rückenlehnenelements 1 angeordnet ist. Dabei ist das zumindest eine flächige Element 5 innerhalb des zumindest einen Polsterelements 3 angeordnet. Auf dem Polsterelement 3 kann weiterhin ein Bezug vorgesehen sein. Ferner ist denkbar, dass weitere Zwischenschichten vorgesehen sind. Die Hitze-/ Feuerabschirmeinrichtung 4 ist im Normalzustand für einen Insassen somit weder sichtbar noch spürbar.

In einem Grundzustand, d.h. in einem Zustand gewöhnlicher Nutzung der Sitzanordnung ist das zumindest eine flächige Element 5 in einer Ebene 8 angeordnet ist, welche mit der Höhenachse Z einen Winkel α einschließt, wobei der Winkel α in einem Bereich zwischen 5° und 45° bevorzugt in einem Bereich zwischen 10° und 25°liegt. Bedingt durch diese Anordnung weist das Polsterelement 3 entlang der Tiefenachse X hinter dem flächigen Element 5 eine keilförmige Aussparung 10 auf. Durch diese Aussparung kann die Schmelze der genannten oberen Bereiche 3b des Polsterelements 3 nach hinten abgeleitet werden. Im Grundzustand ist in dieser keilförmigen Aussparung 10 ein keilförmiges Einsatzelement 11. Vorzugsweise kann das Polstermaterial dieses keilförmigen Einsatzelements 11 aus einem anderweitigen Material als das Polsterelement 3 gefertigt sein. Dies könnte vorzugsweise ein Material sein, welches schneller schmilzt, um einen entsprechenden Kanal für die Schmelze der oberen Bereiche 3b des Polsterelements 3 zu ermöglichen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Rückenlehnenelement
- 1a: unterer Bereich des Rückenlehnenelements
- 2: Trägerelement
- 3: Polsterelement
- 3a: Abschnitt des Polsterelements
- 3b: Bereiche des Polsterelements
- 4: Hitze-/ Feuerabschirmeinrichtung
- 5: flächiges Element
- 6: Lagerungseinrichtung
- 7: Vorspannmechanismus
- 8: Ebene
- 9: Aufnahmen
- 10: Aussparung
- 11: keilförmiges Einsatzelement
- 100: Sitzanordnung
- 101: Sitzteil
- 102: Rahmenelement
- α: Winkel
- X: Tiefenachse
- Y: Breitenachse
- Z: Höhenachse

## Patentansprüche

1. Rückenlehnenelement (1) für eine Sitzanordnung (100) eines Personentransportmittels umfassend ein Trägerelement (2), auf welchem zumindest ein Polsterelement (3) angeordnet ist,
**dadurch gekennzeichnet, dass**
das Rückenlehnenelement (1) eine Hitze-/ Feuerabschirmeinrichtung (4) umfasst, welche lediglich an dem Rückenlehnenelement (1) befestigt ist, wobei die Hitze-/ Feuerabschirmeinrichtung (4) zumindest ein flächiges Element (5) umfasst und in einem entlang einer Höhenachse (Z) unteren Bereich (1a) des Rückenlehnenelements (1) in das zumindest eine Polsterelement (3) integriert ist.

2. Rückenlehnenelement (1) nach Anspruch 1,
**dadurch gekennzeichnet, dass**
die Hitze-/ Feuerabschirmeinrichtung (4) mittels einer Lagerungseinrichtung (6) an dem Trägerelement (2) angeordnet ist, wobei das zumindest eine flächige Element (5) zumindest teilweise aus einem feuerfesten Material und/oder einem wärmeleitenden Material und/oder einem Metall besteht.

3. Rückenlehnenelement (1) nach Anspruch 1 oder 2,
**dadurch gekennzeichnet, dass**
die Hitze-/ Feuerabschirmeinrichtung (4) derart ausgestaltet und dafür vorgesehen ist, dass bei Auftreten eines Hitze- und/oder Brandherdes eine zumindest abschnittsweise Verlagerung des zumindest einen flächigen Elements (5) zu dem Hitze- und/oder Brandherd hin erfolgt.

4. Rückenlehnenelement (1) nach Anspruch 3,
**dadurch gekennzeichnet, dass**
die Lagerungseinrichtung (6) einen Vorspannmechanismus (7) umfasst, welcher eine Vorspannung für das zumindest eine flächige Element (5) gegen einen Abschnitt (3a) des Polsterelements (3) bereitstellt, wobei eine Hitze- und/oder Brandeinwirkung zumindest eine Schwächung der Stabilität des Abschnitts des Polsterelements (3) verursacht, so dass eine Verlagerung des zumindest einen flächigen Elements (5) aufgrund der Vorspannung erfolgt, wobei der Vorspannmechanismus (7) zumindest ein Torsionsfederelement umfasst.

5. Rückenlehnenelement (1) nach einem der Ansprüche 1 bis 3,
**dadurch gekennzeichnet, dass**
das zumindest eine flächige Element (5) zumindest ein Federblech aufweist, welches eine Vorspannung für das zumindest eine flächige Element (5) gegen einen Abschnitt (3a) des Polsterelements (3) bereitstellt, wobei eine Hitze- und/oder Brandeinwirkung zumindest eine Schwächung der Stabilität des Abschnitts (3a) des Polsterelements (3) verursacht, so dass eine Verlagerung eines Abschnitts des zumindest einen flächigen Elements (5) aufgrund der Vorspannung erfolgt.

6. Rückenlehnenelement (1) nach einem der vorhergehenden Ansprüche
**dadurch gekennzeichnet, dass**
das zumindest eine flächige Element (5) derart an dem Trägerelement (2) angeordnet ist, dass bei einer Hitze- und/oder Brandeinwirkung ein Großteil einer Schmelze von Bereichen des Polsterelements, welche entlang der Höhenachse (Z) oberhalb des zumindest einen flächigen Elements (5) angeordnet sind, hinter dem zumindest einem flächigen Element (5) nach unten abgeleitet wird und somit von dem Hitze- und/oder Brandherd weggeleitet wird.

7. Rückenlehnenelement (1) nach einem der vorhergehenden Ansprüche,
**dadurch gekennzeichnet, dass**
in einem Grundzustand das zumindest eine flächige Element (5) in einer Ebene (8) angeordnet ist, welche mit der Höhenachse (Z) einen Winkel α einschließt, wobei der Winkel α in einem Bereich zwischen 5° und 45° bevorzugt in einem Bereich zwischen 10° und 25°liegt.

8. Sitzanordnung (1) nach Anspruch 1
**dadurch gekennzeichnet, dass**
das zumindest eine flächige Element (5) als ein Folienelement ausgebildet ist, welches auf einem Abschnitt des zumindest einen Polsterelements (3) angeordnet ist, wobei das Folienelement auf das zumindest eine Polsterelement (3) aufgeklebt ist.

9. Sitzanordnung (100) mit einem Rückenlehnenelement (1) nach einem der vorherigen Ansprüche

10. Personentransportmittel mit einer Sitzanordnung (1) nach Anspruch 9.
